# EUROPEAN PATENT APPLICATION

(11) **EP 3 170 649 A1**
(43) Date of publication of application: **24.05.2017**
(21) Application number: 16199231.8
(22) Date of filing: 17.11.2016
(51) Int. Cl.: B29C 67/00

(54) **THREE DIMENSIONAL MODELING APPARATUS, THREE DIMENSIONAL MODELING METHOD, PROGRAM, AND STORAGE MEDIUM**

(30) Priority: 19.11.2015 JP 2015226929
(71) Applicant: Nabtesco Corporation, Tokyo 102-0093 (JP)
(72) Inventor: KIRIYAMA, Tomohiro, Kobe-shi, Hyogo 651-2271 (JP); ABE, Kenji, Kobe-shi, Hyogo 651-2271 (JP); KURIMOTO, Hiroshi, Kobe-shi, Hyogo 651-2271 (JP); KUWANO, Masashi, Kobe-shi, Hyogo 651-2271 (JP); TSUTSUI, Masakuni, Kobe-shi, Hyogo 651-2271 (JP); YOKOYAMA, Hiroshi, Chiyoda-ku, Tokyo 102-0093 (JP)
(74) Representative: Grünecker Patent- und Rechtsanwälte PartG mbB

(57) **Abstract**

A three-dimensional modeling apparatus 10, 11 includes a three-dimensional modeling unit 20, 40 and a control unit 15. The three-dimensional modeling unit 20, 40 is configured to stack unit layers ul made of a material solidified in a predetermined solidification pattern thereby to produce a three-dimensional object 0. The control unit 15 is configured to correct a sectional pattern sp at each level in a model M along a lamination direction, allowing for deformation in modeling based on at least one of a material characteristic, a modeling condition, and a facility condition, thereby to determine the solidification pattern corresponding to the sectional pattern sp.

## Description

### TECHNICAL FIELD

The present invention relates to a three-dimensional modeling apparatus and a three-dimensional modeling method for producing a three-dimensional object by stacking unit layers made of a material solidified in a predetermined solidification pattern; and the present invention also relates to a program and a storage medium used for modeling by the three-dimensional modeling apparatus.

### BACKGROUND

Attentions have been paid to AM (Additive Manufacturing) technology, a sort of lamination modeling method, in various technical fields, as in Japanese Patent Application Publication No. 2009-107244(A), Japanese Patent Application Publication No. 2000-43148(A), and Japanese Patent Application Publication No. 2013-526429(A). With AM technology, there is no need of preparing a die prior to modeling, and therefore, a three-dimensional object can be produced rapidly at low costs. In lamination modeling methods, thin layers (herein referred to as "unit layers") made of a material solidified in a predetermined solidification pattern are bound together sequentially to produce a three-dimensional object. Accordingly, it is possible with AM technology to produce a three-dimensional object having a relatively complex shape integrally, not divided into a plurality of parts.

In three-dimensional modeling with AM technology, a solidified unit layer may deform after solidification, as disclosed in Japanese Patent Application Publication No. 2009-107244(A). It is proposed in Japanese Patent Application Publication No. 2009-107244(A) to solidify the material in a pattern that allows for the deformation. However, the deformation allowed for in Japanese Patent Application Publication No. 2009-107244(A) is supposed to be caused only by cure shrinkage of a resin materiaL Therefore, the technique disclosed in Japanese Patent Application Publication No. 2009-107244(A) cannot alone enable production of a three-dimensional object with sufficiently accuracy.

The technique disclosed in Japanese Patent Application Publication No. 2009-107244(A) is only based on a three-dimensional modeling method in which unit layers are stacked by applying a liquid binder onto powdery material layers in a predetermined pattern to bind the powdery material (the material jetting method). However, there have recently been variations of AM technology including a method in which unit layers made of a solidified resin are stacked sequentially by irradiating a surface layer of a light-curing resin composition with a light ray in a predetermined pattern (the vat photopolymerization method) as disclosed in Japanese Patent Application Publication No. 2000-43148(A), and a method in which unit layers made of a sintered material are stacked sequentially by irradiating a layer of a powder material with a light ray in a predetermined pattern (the powder bed fusion method) as disclosed in Japanese Patent Application Publication No. 2013-526429(A). Therefore, it can be presumed that the method disclosed in Japanese Patent Application Publication No. 2009-107244(A) cannot be directly applied to AM technology based on other methods.

### SUMMARY

The present invention addresses the above problem. One object of the present invention is to increase the accuracy of three-dimensional modeling.

A three-dimensional modeling apparatus according to the present invention includes: a three-dimensional modeling unit configured to stack unit layers made of a material solidified in a predetermined solidification pattern thereby to produce a three-dimensional object; and a control unit configured to correct a sectional pattern at each level in a model along a lamination direction, allowing for deformation in modeling based on at least one of a material characteristic, a modeling condition, and a facility condition, thereby to determine the solidification pattern corresponding to the sectional pattern.

In a three-dimensional modeling apparatus according to the present invention, the material characteristic may include at least one of density, specific heat, thermal conductivity, emissivity, and viscosity.

In a three-dimensional modeling apparatus according to the present invention, the material prior to solidification may be a light-curing resin composition including a polymerization initiator, and the material characteristic may include a type and a proportion of the polymerization initiator.

In a three-dimensional modeling apparatus according to the present invention, the modeling condition may include at least one of a shape of a support that supports the three-dimensional object during modeling, lamination direction, lamination pitch, solidification condition, ambient temperature, and heat transfer coefficient of an atmosphere.

In a three-dimensional modeling method according to the present invention, wherein the solidification condition may include at least one of scan direction of energy applied to the material and output density of the energy applied to the material.

In a three-dimensional modeling apparatus according to the present invention, the modeling condition may include an impact of at least one of gravity and buoyancy.

In a three-dimensional modeling apparatus according to the present invention, the three-dimensional modeling unit may include a table configured to support the three-dimensional object during modeling, and the facility condition may include at least one of weight, material, specific heat, and emissivity of the table.

A three-dimensional modeling method according to the present invention is a three-dimensional modeling method for stacking unit layers made of a material solidified in a predetermined solidification pattern thereby to produce a three-dimensional object, the method comprising: correcting a sectional pattern at each level in a model along a lamination direction, allowing for deformation in modeling based on at least one of a material characteristic, a modeling condition, and a facility condition, thereby to determine the solidification pattern corresponding to the sectional pattern; and solidifying the material in accordance with the determined solidification pattern to form unit layers sequentially.

In a three-dimensional modeling method according to the present invention, the material characteristic may include at least one of density, specific heat, thermal conductivity, emissivity, and viscosity.

In a three-dimensional modeling method according to the present invention, the material prior to solidification may be a light-curing resin composition including a polymerization initiator, and the material characteristic may include a type and a proportion of the polymerization initiator.

In a three-dimensional modeling method according to the present invention, the modeling condition may include at least one of a shape of a support that supports the three-dimensional object during modeling, lamination direction, lamination pitch, solidification condition, ambient temperature, and heat transfer coefficient of an atmosphere.

In a three-dimensional modeling method according to the present invention, the solidification condition may include at least one of scan direction of energy applied to the material and output density of the energy applied to the material.

In a three-dimensional modeling method according to the present invention, the modeling condition may include an impact of at least one of gravity and buoyancy.

In a three-dimensional modeling method according to the present invention, the facility condition may include at least one of weight, material, specific heat, and emissivity of a table configured to support the three-dimensional object during modeling.

A program according to the present invention is a program to be executed by a control unit for controlling production of a three-dimensional object using a three-dimensional modeling apparatus, wherein when the program is executed by the control unit, the program causes the three-dimensional modeling apparatus to perform the three-dimensional modeling method of the present invention described above.

A storage medium according to the present invention is a storage medium storing a program to be executed by a control unit for controlling production of a three-dimensional object using a three-dimensional modeling apparatus, wherein when the program is executed by the control unit, the program causes the three-dimensional modeling apparatus to perform the three-dimensional modeling method of the present invention described above.

The present invention increases the accuracy of three-dimensional modeling.

### BRIEF DESCRIPTION OF THE DRAWINGS

Fig. 1 illustrates an embodiment of the present invention, showing an example of a three-dimensional modeling apparatus.
Fig. 2 illustrates a three-dimensional modeling method using the three-dimensional modeling apparatus shown in Fig. 1.
Fig. 3 illustrates another example of the three-dimensional modeling apparatus.
Fig. 4 is a flowchart illustrating the three-dimensional modeling method
Fig. 5 is a perspective view illustrating an example of a three-dimensional model for three-dimensional modeling.
Fig. 6 illustrates a sectional pattern of the three-dimensional model of Fig. 5.
Fig. 7 is a front view illustrating an example of deformation occurring when the three-dimensional model of Fig. 5 is produced

### DESCRIPTION OF EXAMPLE EMBODIMENTS

An embodiment of the present invention will now be described with reference to the attached drawings. In the attached drawings, the dimensions and the aspect ratios may be appropriately altered for emphasis, so as to facilitate illustration and comprehension of the drawings.

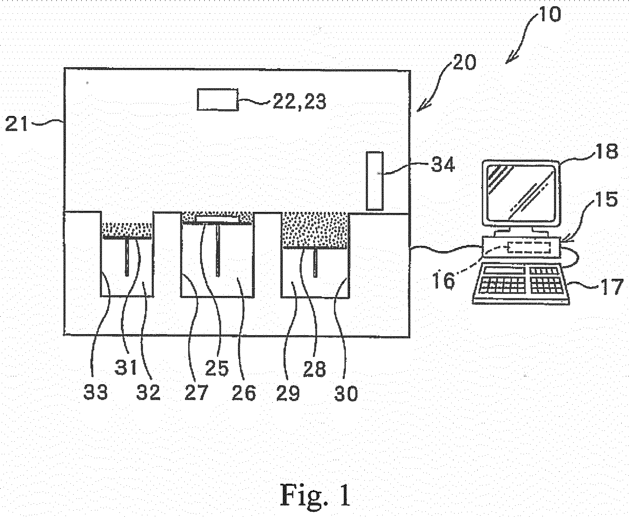

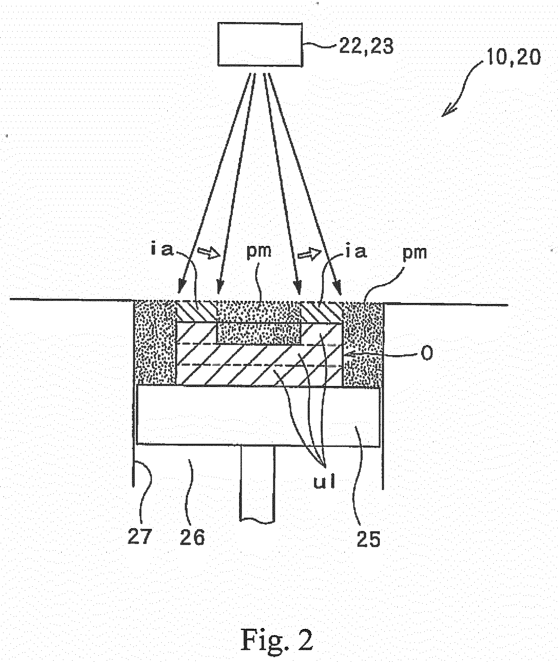

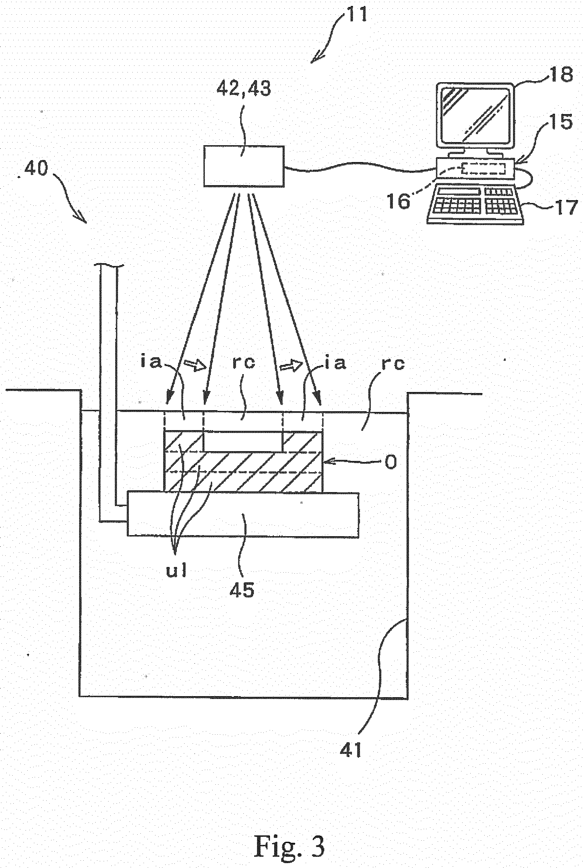

First, a three-dimensional modeling apparatus will be described with reference to Figs. 1 to 3. Figs. 1 and 2 illustrate an example of the three-dimensional modeling apparatus. Fig. 3, which corresponds to Fig. 2, illustrates a variation of a three-dimensional modeling unit in the three-dimensional modeling apparatus.

As shown in Fig. 1, the three-dimensional modeling apparatus 10 may include a control unit 15 and a three-dimensional modeling unit 20. The control unit 15 may control the operation of elements of the three-dimensional modeling unit 20. The control unit 15 may be connected to input/output devices such as a keyboard 17 for receiving input of commands for managing the three-dimensional modeling apparatus 10 from an operator and a display 18 for visually displaying the operation status of the three-dimensional modeling apparatus 10. The control unit 15 can access a storage medium 16 storing a program for implementing a process to be performed on the three-dimensional modeling apparatus 10. The storage medium 16 may be constituted by a known program storage medium, for example, a memory such as ROM or RAM, a hard disk, a disk-like storage medium such as CD-ROM, DVD-ROM, or a flexible disk, etc.

The three-dimensional modeling unit 20 may produce a three-dimensional object 0 by stacking unit layers ul made of a material solidified in a predetermined solidification pattern, based on a control signal from the control unit 15. In the example shown in Figs. 1 and 2, the three-dimensional modeling unit 20 may be configured to perform lamination modeling by the powder bed fusion method That is, the three-dimensional modeling unit 20 shown in Figs. 1 and 2 may sequentially form unit layers ul made of a sintered material by irradiating a layer of a powder material pm with energy in a predetermined pattern, thereby to produce a three-dimensional object 0. The powder material pm may be a metal powder made of titanium, steel or other alloys, a synthetic powder such as polyamide or polystyrene, polyether ether ketone (PEEK), synthetic coating sand, or a ceramic powder.

As shown in Fig. 2, the three-dimensional modeling unit 20 may include a casing 21, and a solidification means 22 and an elevation table 25 arranged in the casing 21. The solidification means 22 may be constituted by an irradiation device 23 for irradiating the powder material pm with energy In the example shown, the irradiation device 23 may include an energy source for emitting a laser beam or an electron beam, and a scanner for adjusting the route of the emitted energy The scanner for adjusting the route of the beam may be a galvanometer mirror or a micro electro mechanical system (MEMS).

As elucidated in Fig. 2, the three-dimensional modeling unit 20 may further include an elevation table 25 for supporting a three-dimensional object being modeled, a feeding table 28 for supporting the powder material pm prior to feeding, and a collection table 31 for collecting surplus of the powder material pm. The elevation table 25 may be located within an elevation guide chamber 26 in the casing 21. The elevation guide chamber 26 may be partitioned with elevation guide partition walls 27 and may be open upward The elevation table 25 may be movable vertically within the elevation guide chamber 26.

Likewise, the feeding table 28 may be located within a feeding guide chamber 29 in the casing 21. The feeding guide chamber 29 may be partitioned with feeding guide partition walls 30 and may be open upward. The feeding table 28 may be movable vertically within the feeding guide chamber 29. Further, the collection table 31 may be located within a collection guide chamber 32 in the casing 21. The collection guide chamber 32 may be partitioned with collection guide partition walls 33 and may be open upward The collection table 31 may be movable vertically within the collection guide chamber 32.

Unused powder material pm may be retained above the feeding table 28 within the feeding guide chamber 29. When the feeding table 28 ascends by a predetermined amount, an application device 34 may move horizontally and scrape a predetermined amount of the powder material pm from above the feeding table 28. The powder material pm scraped by the application device 34 may be fed onto the elevation table 25, and the surplus of the powder material pm may be collected onto the collection table 31 within the collection guide chamber 32. Next, the solidification means 22 may irradiate a layer of the powder material pm on the elevation table 25 with a laser beam or an electron beam in a predetermined pattern in accordance with a control signal from the control unit 15. The powder material pm may be fused together in the irradiated area ia irradiated with the laser beam, etc. Thus, a unit layer ul may be formed of the powder material pm solidified in the predetermined pattern (a two-dimensional shape). Then, the collection table 31 and the elevation table 25 may descend by a predetermined amount, for example, 0.1 mm, and the feeding table 28 may ascend by a predetermined amount, for example, 0.2 mm. The application device 34 may start to move again to form another unit layer ul as described above. The amount of descent of the elevation table 25 may make the thickness of the unit layer uL As the unit layers ul are formed sequentially and fused with each other, the three-dimensional object 0 can be formed integrally.

Fig. 3 illustrates another three-dimensional modeling apparatus 11 different from the three-dimensional modeling apparatus 10 shown in Figs. 1 and 2. As with the three-dimensional modeling apparatus 10 shown in Figs. 1 and 2, the three-dimensional modeling apparatus 11 shown in Fig. 3 may produce a three-dimensional object 0 by stacking unit layers ul made of a material solidified in a predetermined solidification pattern, based on a control signal from the control unit 15. In the example shown in Fig. 3, a three-dimensional modeling unit 40 of the three-dimensional modeling apparatus 11 may be configured to perform lamination modeling by the vat photopolymerization method, or stereolithography. That is, the three-dimensional modeling unit 40 shown in Fig. 3 may sequentially stack unit layers ul made of a cured resin by irradiating a surface layer of a light-curing resin composition rc with a laser beam in a predetermined pattern, thereby to produce a three-dimensional object 0. The use of a laser beam may be replaced with the surface exposure method [in which a planar light ray is applied using a lamp that emits a light ray in an ultraviolet region].

As shown in Fig. 3, the three-dimensional modeling unit 40 may include a casing (not shown), and a vat 41 and a solidification means 42 arranged in the casing. The vat 41 may retain a liquid light-curing resin composition rc. The three-dimensional modeling unit 40 may further include an elevation table 45 that can ascend and descend. The elevation table 45 may descend to immerse itself into the resin composition rc retained in the vat 41. The solidification means 42 may be constituted by, for example, an irradiation device 43 for emitting a light ray causing curing of the light-curing resin composition rc, for example, a laser beam in an ultraviolet region. The irradiation device 43 may include a light source and a scanner, as with the irradiation device 23 of Figs. 1 and 2.

As shown in Fig. 3, during modeling, the elevation table 45 may be positioned such that the uncured resin composition rc is present above the elevation table 45 so as to have a predetermined thickness. Next, the solidification means 42 may irradiate a layer of the liquid resin composition rc on the elevation table 45 with a laser beam (or a planar light ray for the surface exposure method) in a predetermined pattern (a two-dimensional shape) in accordance with a control signal from the control unit 15. In the area irradiated with the laser beam, the liquid resin composition rc may initiate photopolymerization and cure. Thus, a unit layer ul may be formed of the liquid resin composition rc solidified in a predetermined pattern. Then, the elevation table 45 may descend by a predetermined amount, for example, 0.1 mm. The solidification means 42 may perform the laser irradiation again to form another unit layer uL The amount of descent of the elevation table 45 may make the thickness of the unit layer ul. As the unit layers ul are formed sequentially and bound to each other, the three-dimensional object 0 can be formed integrally.

The following is the description of a three-dimensional modeling method using the three-dimensional modeling apparatus 10, or a method of producing a three-dimensional object 0 using the three-dimensional modeling apparatus 10. The three-dimensional modeling method described below may be performed by the control unit 15 reading a program stored on a storage medium 16.

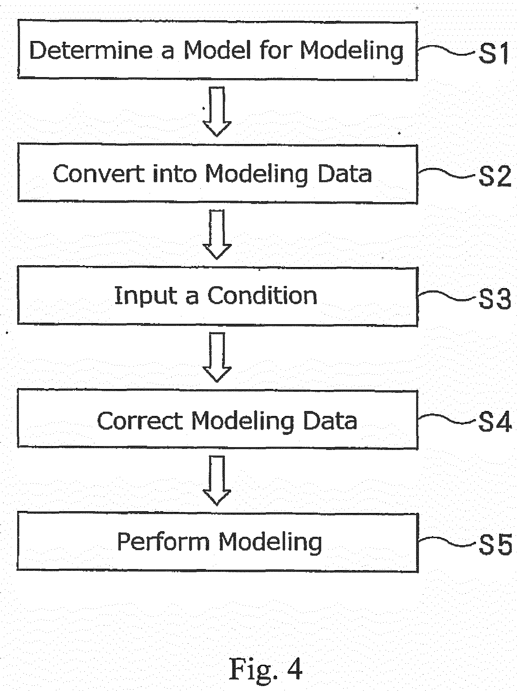

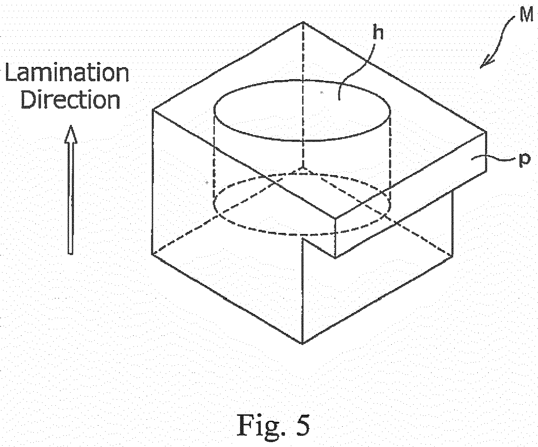

As shown in Fig. 4, the three-dimensional modeling method may include a first step S1 to a fifth step S5. First, in the first step S1, a model for modeling may be determined. By way of an example, an object is supposed to be modeled on a three-dimensional model M shown in Fig. 5. The three-dimensional model M shown in Fig. 5 may have a rectangular parallelepiped body with a cylindrical hole h which is open upward and a projection p projecting sideways. The projection p may constitute an overhang having no support therebelow.

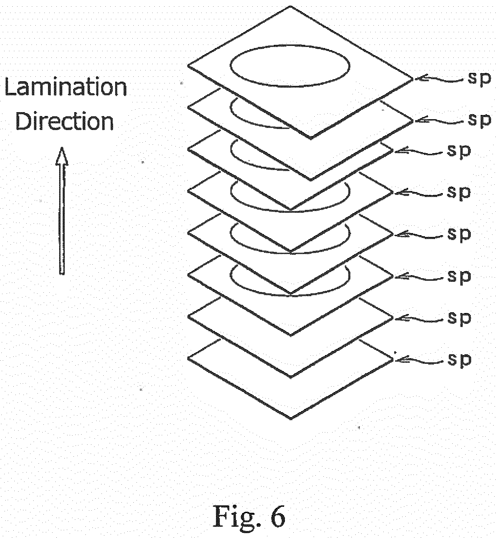

Next, in the second step S2, CAD data of the three-dimensional model M may be converted into a modeling data used for modeling by the three-dimensional modeling apparatus 10. This data processing may be performed by, for example, the control unit 15 reading and processing the CAD data of the three-dimensional model M stored on the storage medium 16. More specifically, the control unit 15 may generate a sectional pattern sp representing the sectional shape of the three-dimensional model M. The sectional pattern sp may correspond to the shape in the section orthogonal to the lamination direction in the lamination modeling. The sectional pattern sp may be generated for each level in the three-dimensional model M corresponding to the pitch in the lamination direction of the lamination modeling. Fig. 6 shows an example in which the three-dimensional model M is divided into a plurality of sectional patterns sp.

In the second step S2, the control unit 15 may also determine from the shape of the three-dimensional model M whether or not a support that supports the overhang vertically is necessary. When it is determined that the support is necessary, the sectional patterns sp may include the sectional shape of the support.

Then, in the third step S3, the type of material and the modeling conditions may be input to the control unit 15 using a keyboard 17 and the display 18, for example.

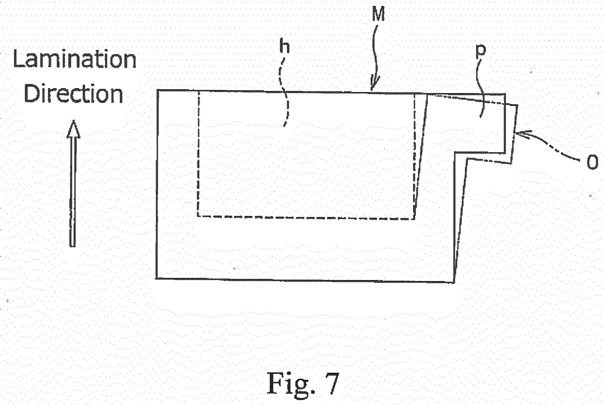

Next, in the fourth step S4, the control unit 15 may correct the sectional pattern sp at each level in the three-dimensional model M along the lamination direction, thereby to determine the solidification patterns corresponding to the sectional patterns sp. In the three-dimensional modeling by lamination modeling, the unit layers ul made of a solidified material may be stacked sequentially. To increase the accuracy of modeling, the unit layers ul may have a very small thickness. In various processing not limited to lamination modeling, deformation may occur in modeling. In particular, the three-dimensional modeling by the powder bed fusion method, in which a material may be locally fused with a laser beam or an electron beam and then cooled for solidification thereby to form very thin unit layers ul sequentially, may be impacted by thermal stresses in the process and may cause deformation in modeling. On the other hand, the three-dimensional modeling by the vat photopolymerization method, in which a material may be solidified by photopolymerization to form very thin unit layers ul sequentially, may microscopically involve uneven photopolymerization that may cause deformation in modeling. For example, in modeling on the three-dimensional model M shown in Fig. 5, if material layers are solidified in the sectional patterns sp shown in Fig. 6, the produced three-dimensional object 0 may deform, as viewed sideways, into the shape represented by a chain double-dashed line in Fig. 7 from the shape of the three-dimensional model M represented by a solid line. The shape represented by a chain double-dashed line as deformed downward in Fig. 7 is a mere example. The direction and the amount of deformation may vary depending on the heat radiation conditions and the modeling shape.

In the fourth step S4, the solidification pattern in which to solidify the material layers may be determined allowing for the deformation in modeling. In the example shown in Figs. 1 and 2, the region of the surface layer of the powder material pm to be irradiated with energy (a laser beam or an electron beam from a solid-state laser that can emit high energy, etc.) may be specified as a solidification pattern, and in the example shown in Fig. 3, the region of the surface layer of the liquid resin composition rc to be irradiated with a laser beam or a planar light ray in an ultraviolet region may be specified as a solidification pattern.

By way of a specific example, the first operation in the fourth step S4 may be to determine the solidification pattern by correcting the sectional pattern sp of the unit layer ul to be formed last such that this unit layer ul finally has the same shape as the sectional pattern sp of the corresponding portion of the three-dimensional model M. Next, the solidification pattern of the layer to be stacked immediately before the last layer may be determined such that this unit layer ul solidified in the solidification pattern finally has the same shape as the sectional pattern sp of the corresponding portion of the three-dimensional model M. The solidification pattern may thus be determined for each unit layer ul in the order opposite to the order of stacking. Finally, the solidification patterns corresponding to all the sectional patterns sp of the three-dimensional model M may be determined

As described above, the deformation in modeling may occur due to the shape of the three-dimensional model M represented by an overhang. Therefore, the correction of the sectional patterns sp may be to allow for the deformation in modeling based on the shape of the three-dimensional model M. However, the Inventors failed, in repeated experiments, to produce the three-dimensional object 0 with a sufficient accuracy by allowing only for the deformation based singly on the shape of the three-dimensional model M.

In this respect, the Inventors conducted further investigation, resulting in the finding that the three-dimensional object 0 can be produced with a high accuracy by predicting the deformation in modeling based on at least one of the material characteristics, the modeling conditions, and the facility conditions. That is, in determining the solidification pattern corresponding to each sectional pattern sp, it may be suitable to correct the sectional pattern at each level in the three-dimensional model M along the lamination direction, allowing for the deformation in modeling based on at least one of the material characteristics, the modeling conditions, and the facility conditions. This correction method may enable producing the three-dimensional object 0 with a high accuracy, as well as omitting a support for the three-dimensional object having a shape that conventionally required a support therefor while retaining the sufficient accuracy. If a support is omitted, a later step for removing the support can be eliminated, and it may be possible to avoid a disadvantage inevitably occurring with use of the support, such as a vestige of the support remaining in the three-dimensional object 0 after removal thereof.

The material characteristics that should be allowed for in predicting the deformation in modeling may be at least one of the material characteristics before solidification and the material characteristics after solidification. Examples of the material characteristics that should be allowed for in correcting the sectional patterns sp to determine the solidification patterns may include at least "a density," "a specific heat," "a thermal conductivity," "an emissivity (a radiation factor) of the material," and "a viscosity."

The "density" may indicate the magnitude of gravity that is present in and around the three-dimensional object 0 being modeled and is acting on the unsolidified material (the gravity also impacts on the buoyancy in the vat photopolymerization method). If the density is allowed for in addition to the shape of the three-dimensional model M, the deformation in modeling can be predicted more accurately.

The "specific heat," "thermal conductivity," and "emissivity (radiation factor) of the material" may indicate how much of the heat produced during modeling is stored or what is the rate of radiating the heat produced during modeling. The "viscosity" may not only indicate the likeliness of deformation in fusion but may also impact largely on the amount of heat transfer between adjacent layers in lamination modeling. More specifically, a lower viscosity may increase fluidity, resulting in higher tightness of adhesion and a larger heat transfer between adjacent layers. A lower viscosity may also facilitate deformation. On the other hand, a higher viscosity may reduce fluidity, resulting in lower tightness of adhesion and a smaller heat transfer between adjacent layers. A higher viscosity may also inhibit deformation. As described above, the "specific heat," "thermal conductivity," or "viscosity" may be allowed for to predict more accurately the deformation in three-dimensional modeling that typically involves heat production, thereby to model the three-dimensional object 0 with sufficient accuracy.

If the material includes a light-curing resin composition containing a polymerization initiator, it may be preferable to allow for "the type and proportion of the polymerization initiator" as a material characteristic in predicting deformation in three-dimensional modeling. The curing rate of a light-curing resin composition containing a polymerization initiator may depend largely on the type of the polymerization initiator and the proportion of the polymerization initiator mixed in the light-curing resin composition. Accordingly, "the type and proportion of the polymerization initiator" may be allowed for to predict more accurately the deformation in three-dimensional modeling, thereby to model the three-dimensional object 0 with sufficient accuracy.

The modeling condition that should be allowed for in predicting deformation in modeling may include at least one of the "shape of a support that may support the three-dimensional object 0 during modeling," "lamination direction," "lamination pitch," "solidification condition," "ambient temperature," and "heat transfer coefficient of the atmosphere." As to the "shape of a support that may support the three-dimensional object 0 during modeling," the manner and degree of deformation may vary largely between three-dimensional models M having the same shape, depending on the presence of the support and the shape of the support. Likewise, for three-dimensional models M having the same shape, the manner and the degree of deformation may vary largely depending on the "lamination direction." In addition, for example, the degree of storing or radiating the heat by a solidified unit layer ul may vary largely depending on the "lamination pitch," "solidification condition," "ambient temperature," and "heat transfer coefficient of the atmosphere," resulting in a wide variety of the manner and the degree of the deformation. Accordingly, the deformation in three-dimensional modeling can be predicted more accurately and the three-dimensional object 0 can be modeled with a sufficient accuracy by allowing for the "shape of a support that may support the three-dimensional object 0 during modeling," "lamination direction," "lamination pitch," "solidification condition," "ambient temperature," or "heat transfer coefficient of the atmosphere." The heat transfer coefficient of the atmosphere may be set when the atmosphere is constituted by gases such as argon gas and nitrogen gas. In addition, the heat transfer coefficient of the atmosphere may be a constant value for each material or may be a value varying with a gas flow as a parameter for more accurate analysis.

The "solidification condition" included in the modeling condition may include at least one of the scan direction of the energy (e.g., a laser beam and an electron beam) applied to the material and the output density of the energy applied to the materiaL The directional tendency such as direction of warping may occur in accordance with the scan direction. In addition, the degree of deformation may vary depending on the magnitude of the energy density. Accordingly, the "scan direction of the energy (e.g., a laser beam and an electron beam) applied to the material" or the "output density of the energy applied to the material" may be allowed for to predict more accurately the deformation in three-dimensional modeling, thereby to model the three-dimensional object 0 with sufficient accuracy.

Further, in correcting the sectional patterns sp to determine the solidification patterns, it may be suitable to allow for the gravity acting on the three-dimensional object 0 being modeled and the buoyancy acting on the three-dimensional object 0 being modeled There may be a large difference in various aspects including the direction in which the forces act, between the gravity acting on the three-dimensional object 0 being modeled in the three-dimensional modeling apparatus 10 shown in Figs. 1 and 2 and the buoyancy acting on the three-dimensional object 0 being modeled in the three-dimensional modeling apparatus 11 shown in Fig. 3. Accordingly, "the impact of at least one of the gravity and the buoyancy" may be allowed for to predict more accurately the deformation in three-dimensional modeling, thereby to model the three-dimensional object 0 with sufficient accuracy.

The facility conditions that should be allowed for in predicting deformation in modeling may include at least one of the "weight of the elevation table 25," "material of the elevation table 25," "specific heat of the elevation table 25," and "emissivity of the elevation table 25." The unit layers ul that are solidified in modeling may typically be heated The emission rate of the heat from the unit layers ul may be impacted by the "weight of the elevation table 25," "material of the elevation table 25," "specific heat of the elevation table 25," and "emissivity of the elevation table 25." Accordingly, the "weight of the elevation table 25," "material of the elevation table 25," "specific heat of the elevation table 25," and "emissivity of the elevation table 25" may be allowed for to predict more accurately the deformation in three-dimensional modeling, thereby to model the three-dimensional object 0 with sufficient accuracy.

After the modeling data is corrected in the fourth step S4 as described above, the fifth step S5 may be performed in which the layers of the material may be solidified in the solidification patterns to produce the three-dimensional object 0. More specifically, with the three-dimensional modeling apparatus 10 shown in Figs. 1 and 2, a layer of the powder material pm may be irradiated with energy in the region of the solidification pattern determined in the fourth step S4, thereby to sequentially form the unit layers ul made of a sintered material and produce the three-dimensional object 0. With the three-dimensional modeling apparatus 11 shown in Fig. 3, the surface layer of the liquid light-curing resin composition rc may be irradiated with light in the region of the solidification pattern determined in the fourth step S4, thereby to sequentially stack the unit layers ul made of a cured resin and produce the three-dimensional object 0.

In the embodiments described above, the three-dimensional modeling method for stacking unit layers ul made of a material solidified in a predetermined solidification pattern thereby to produce a three-dimensional object 0 may include: correcting a sectional pattern sp at each level in a model M along a lamination direction, allowing for deformation in modeling based on at least one of a material characteristic, a modeling condition, and a facility condition, thereby to determine the solidification pattern corresponding to the sectional pattern sp; and solidifying the material in accordance with the determined solidification pattern to form unit layers ul sequentially. The three-dimensional modeling apparatus 10,11 may include: a three-dimensional modeling unit 20, 40 configured to stack unit layers ul made of a material solidified in a predetermined solidification pattern thereby to produce a three-dimensional object 0; and a control unit 15 configured to correct a sectional pattern sp at each level in a model M along a lamination direction, allowing for deformation in modeling based on at least one of a material characteristic, a modeling condition, and a facility condition, thereby to determine the solidification pattern corresponding to the sectional pattern sp. Such embodiments may enable a three-dimensional object 0 to be produced with sufficient accuracy.

The present invention is not limited to the embodiments described above with reference to the drawings and can be implemented with various aspects. The three-dimensional modeling method described above is a mere example. The present invention may also be applied to, e.g., the modeling method in which a resin that can be fused with heat may be extruded from a nozzle and stacked (the material extrusion method), the lamination modeling method in which a liquid binder may be jetted from a nozzle for binding of a powder material (the binder jetting method), the lamination modeling method in which a liquid material is jetted from a nozzle for selective deposition (the material jetting method), and the modeling method in which a metal material is supplied and simultaneously heat energy is applied with laser for fusion and deposition (the directed energy deposition method).

## Claims

1. A three-dimensional modeling apparatus comprising:
a three-dimensional modeling unit configured to stack unit layers made of a material solidified in a predetermined solidification pattern thereby to produce a three-dimensional object; and
a control unit configured to correct a sectional pattern at each level in a model along a lamination direction, allowing for deformation in modeling based on at least one of a material characteristic, a modeling condition, and a facility condition, thereby to determine the solidification pattern corresponding to the sectional pattern.

2. The three-dimensional modeling apparatus of claim 1, wherein the material characteristic includes at least one of density, specific heat, thermal conductivity, emissivity, and viscosity.

3. The three-dimensional modeling apparatus of claim 1 or 2, wherein
the material prior to solidification is a light-curing resin composition including a polymerization initiator, and
the material characteristic includes a type and a proportion of the polymerization initiator.

4. The three-dimensional modeling apparatus of any one of claims 1-3, wherein the modeling condition includes at least one of a shape of a support that supports the three-dimensional object during modeling, lamination direction, lamination pitch, solidification condition, ambient temperature, and heat transfer coefficient of an atmosphere.

5. The three-dimensional modeling apparatus of claim 4, wherein the solidification condition includes at least one of scan direction of energy applied to the material and output density of the energy applied to the materiaL

6. The three-dimensional modeling apparatus of any one of claims 1-5, wherein the modeling condition includes an impact of at least one of gravity and buoyancy.

7. The three-dimensional modeling apparatus of any one of claims 1-6, wherein
the three-dimensional modeling unit includes a table configured to support the three-dimensional object during modeling, and
the facility condition includes at least one of weight, material, specific heat, and emissivity of the table.

8. A three-dimensional modeling method for stacking unit layers made of a material solidified in a predetermined solidification pattern thereby to produce a three-dimensional object, the method comprising:
correcting a sectional pattern at each level in a model along a lamination direction, allowing for deformation in modeling based on at least one of a material characteristic, a modeling condition, and a facility condition, thereby to determine the solidification pattern corresponding to the sectional pattern; and
solidifying the material in accordance with the determined solidification pattern to form unit layers sequentially.

9. The three-dimensional modeling method of claim 8, wherein the material characteristic includes at least one of density, specific heat, thermal conductivity, emissivity, and viscosity.

10. The three-dimensional modeling method of claim 8 or 9, wherein
the material prior to solidification is a light-curing resin composition including a polymerization initiator, and
the material characteristic includes a type and a proportion of the polymerization initiator.

11. The three-dimensional modeling apparatus of any one of claims 8-10, wherein the modeling condition includes at least one of a shape of a support that supports the three-dimensional object during modeling, lamination direction, lamination pitch, solidification condition, ambient temperature, and heat transfer coefficient of an atmosphere.

12. The three-dimensional modeling method of claim 11, wherein the solidification condition includesat least one of scan direction of energy applied to the material and output density of the energy applied to the material.

13. The three-dimensional modeling method of any one of claims 8-12, wherein the facility condition includes at least one of weight, material, specific heat, and emissivity of a table configured to support the three-dimensional object during modeling.

14. A program to be executed by a control unit for controlling production of a three-dimensional object using a three-dimensional modeling apparatus,
wherein when the program is executed by the control unit, the program causes the three-dimensional modeling apparatus to perform the three-dimensional modeling method of any one of claims 8-13.

15. A storage medium storing a program to be executed by a control unit for controlling production of a three-dimensional object using a three-dimensional modeling apparatus,
wherein when the program is executed by the control unit, the program causes the three-dimensional modeling apparatus to perform the three-dimensional modeling method of any one of claims 8-13.
